# EUROPÄISCHE PATENTSCHRIFT

(11) **EP 1 119 714 B1**
(45) Veröffentlichungstag und Bekanntmachung des Hinweises auf die Patenterteilung: **18.12.2002**
(21) Anmeldenummer: 99970452.1
(22) Anmeldetag: 13.09.1999
(51) Int. Cl.: F16F 9/32

(54) **KOLBEN MIT EINEM KOLBENRING**
PISTON WITH PISTON RING
PISTON DOTE D'UN SEGMENT DE PISTON

(30) Priorität: 09.10.1998 DE 19846610
(43) Veröffentlichungstag der Anmeldung: 01.08.2001
(73) Patentinhaber: ThyssenKrupp Bilstein GmbH, 58256 Ennepetal (DE); GKN Sinter Metals GmbH, Bonn, 53177 Bonn (DE)
(72) Erfinder: BETSCH, Hans-Joachim, D-59174 Kamen (DE); MAY, Ewald, D-53175 Bonn (DE)
(86) Internationale Anmeldenummer: EP9906760
(87) Internationale Veröffentlichungsnummer: WO00022316

(56) Entgegenhaltungen:
- DE-A- 4 342 755
- DE-U- 8 814 123
- FR-A- 2 487 031
- GB-A- 2 072 797

## Beschreibung

Die Erfindung betrifft einen Kolben mit einem Kolbenring für ein hydraulisches oder pneumatisches Aggregat, insbesondere für einen Schwingungsdämpfer, nach dem Oberbegriff des Anspruchs 1.

Zur Reduzierung der gleitenden Reibung zwischen Kolben und Zylinderwand ist es bekannt, am äußeren Umfang des Kolbens einen Kolbenring, vorzugsweise aus Kunststoff, einzusetzen.

Die DE 37 01 757 A1 zeigt einen derartigen Kolben mit einem Kolbenring, der in einer umlaufenden Nut am äußeren Mantel des Kolbens liegt. Der Kolbenring nach dem vorzitierten Stand der Technik wird auch als Folie bezeichnet, da seine axiale Erstreckung ein mehrfaches der Ringwandstärke beträgt. Nachteilig summieren sich die Toleranzen der Nut, des Zylinderinnendurchmessers und der Foliendicke. Von daher ist es erforderlich, die Toleranzen so zu wählen, daß trotzdem noch eine ausreichende Leichtgängigkeit des Kolbens im Zylinderrohr erzielt wird, was ein Bewegen des Kolbenringes in der Nut zur Folge hat. Letztgenanntes führt zu einem Rumpeln des Stoßdämpfers, welches durchaus auch im Fahrgastraum hörbar ist.

Nach der DE 90 17 933 U1 ist es bekannt, den Kolbenring axial oder radial in der Nut zu verspannen. Die hier gezeigte Verspannung ist jedoch sehr bauaufwendig und dementsprechend nur mit hohem Aufwand zu realisieren.

Der Erfindung liegt die Aufgabe zugrunde, einen gattungsgemäßen Kolben derartig mit einem Kolbenring zu verbinden, daß zum einen keine Rumpelgeräusche auftreten, daß darüber hinaus aber eine einfache Fertigung mit wenig Bauteilen erfolgen kann.

Diese Aufgabe wird erfindungsgemäß durch die Merkmale des Anspruchs 1 gelöst. Vorteilhafte Aus- und Weiterbildungen sind in den Ansprüchen 2 bis 4 beschrieben.

Die mit der Erfindung erzielten Vorteile bestehen insbesondere darin, daß der mit einem Kolbenring versehene zweiteilige Kolben einfach herstellbar ist und eine sichere Verspannung des Kolbenrings im Kolben gewährleistet wird, ohne daß dieses wesentlich von den Toleranzen der Bauteile abhängig ist. Darüber hinaus wird beim Einsatz eines erfindungsgemäßen Kolbens bei einem Schwingungsdämpfer ein im Fahrgastraum eines Fahrzeugs hörbares Rumpeln vermieden.

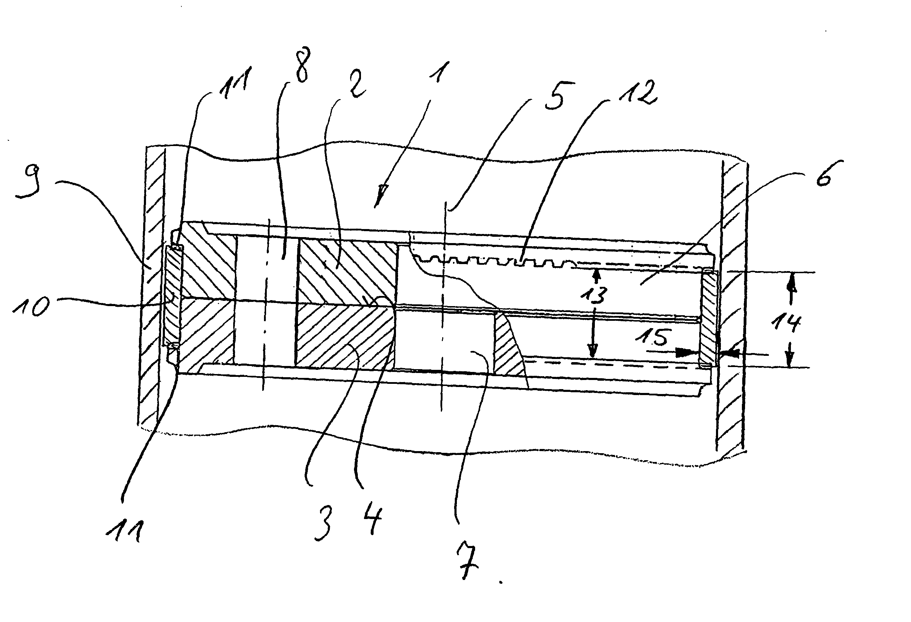

Ein Ausführungsbeispiel der Erfindung ist in der Zeichnung dargestellt und wird im folgenden näher beschrieben. Die einzige Figur zeigt einen Teilschnitt durch einen Kolben, der am Außenumfang in einer umlaufenden Nut einen Kolbenring trägt.

Der Kolben 1 ist aus zwei im wesentlichen identischen Teilen 2, 3 zusammengesetzt, die mit Anlageflächen 4 quer zur Symmetrieachse 5 aneinanderliegen. Die aneinanderliegenden Teile 2, 3 des Kolbens 1 sind so ausgebildet, daß am Außenumfang eine umlaufende zentrale Nut 6 gebildet wird. Der Kolben 1 weist eine zentrale Bohrung 7 auf, durch die sich üblicherweise eine sich zentral erstreckende Aufnahmevorrichtung am Ende der nicht dargestellten Kolbenstange erstreckt, so daß der Kolben 1 über die Bohrung 7 am Ende der Kolbenstange fixiert wird. Durchströmöffnungen 8, die ein- oder beidseitig über Ventile verschließbar sind, dienen zum gesteuerten Durchfluß und damit zum gesteuerten Dämpfen der durchfließenden Dämpfungsflüssigkeit.

Zur Abdichtung und radialen Abstützung des Kolbens 1 gegenüber der Innenwand des Zylinders 9 dient ein Kolbenring 10. Dieser Kolbenring 10, der über den Umfang ein- oder mehrfach geteilt ausgebildet sein kann, wird in der Nut 6 geführt.

Die Seitenflächen 11 der Nut 6 sind mit sich zur Nut 6 erstreckenden Vorsprüngen 12 ausgebildet. Im Ausführungsbeispiel weisen die sich radial erstreckenden Vorsprünge 12 einen trapezförmigen Querschnitt auf. Der Abstand 13 zwischen den Vorsprüngen 12 ist geringer als die axiale Erstreckung 14 des Kolbenringes 10. Im Ausführungsbeispiel ist der Kolbenring 10 aus Kunststoff hergestellt. Seine axiale Erstreckung 14 beträgt ein mehrfaches der Ringwanddicke 15. Von daher wird der so ausgebildete Kolbenring 10 auch als Folie bezeichnet.

Im Ausführungsbeispiel ist die axiale Erstreckung 14 des Kolbenringes 10 so bemessen, daß das Volumen des Kolbenringes 10, das durch die Vorsprünge 12 beim Zusammenbau der beiden Teile 2, 3 des Kolbens 1 verdrängt wird, kleiner ist als das auch nach der Montage nicht vom Kolbenring 10 ausgefüllte Volumen der Nut 6 zwischen den Vorsprüngen 12. Die Bemessung der Tiefe, des Querschnittes und des Teilungsabstandes der Vorsprünge 12 in Verbindung mit der Bemessung des Übermaßes der axialen Erstreckung 14 des Kolbenrings 10 mit Bezug auf die Eindringtiefe der Vorsprünge 12 in den Kolbenring 10 ist vom Fachmann derartig auszulegen, daß alle axialen Toleranzen sämtlicher Bauteile, die in diesem Bereich von Bedeutung sind, ausgeglichen werden können, ohne daß es zu einer starken Verquetschung kommt.

Die vorbeschriebene Ausbildung gewährleistet eine feste, nicht verrückbare und damit nicht einem Verschleiß ausgesetzte Verbindung zwischen Kolben 1 und Kolbenring 10. Trotzdem ist eine einfache Konstruktion gefunden, die sicherstellt, daß die Funktionsqualität des Stoßdämpfers nicht durch sogenanntes Rumpeln gemindert wird.

### Bezugszeichenliste

- 1.: Kolben
- 2.: Teil
- 3.: Teil
- 4.: Anlagefläche
- 5.: Symmetrieachse
- 6.: Nut
- 7.: Bohrung
- 8.: Durchströmöffnung
- 9.: Zylinder
- 10.: Kolbenring
- 11.: Seitenfläche
- 12.: Vorsprung
- 13.: Abstand
- 14.: axiale Erstreckung
- 15.: Ringwanddicke

## Patentansprüche

1. Kolben (1) mit einem Kolbenring (10) für ein hydraulisches oder pneumatisches Aggregat, insbesondere für einen Schwingungsdämpfer, wobei der mit einer Dämpfungseinrichtung versehene Kolben (1) an einer Kolbenstange angeordnet ist, einen Zylinder (9) in zwei Arbeitsräume unterteilt und aus wenigstens zwei Teilen (2, 3) besteht, die an einer sich quer zur Symmetrieachse (5) erstreckenden Anlagefläche (4) aneinanderliegen und wobei der vorzugsweise aus Kunststoff bestehende Kolbenring (10) eine axiale Erstreckung (14) aufweist, die ein mehrfaches der Ringwanddicke (15) beträgt und in einer sich vorzugsweise über beide Teile (2, 3) erstreckenden außen umlaufenden Nut (6) liegt, **dadurch gekennzeichnet, daß** die Seitenflächen (11) der Nut (6) mit sich zur Nut (6) erstreckenden Vorsprüngen (12) ausgebildet sind und der Abstand (13) zwischen den Vorsprüngen (12) der jeweiligen Seitenflächen (11) geringer ist als die axiale Erstreckung (14) des Kolbenringes (10) vor der Montage.

2. Kolben nach Anspruch 1, **dadurch gekennzeichnet, daß** die Vorsprünge (12) sich radial erstrecken und keilförmig ausgebildet sind.

3. Kolben nach Anspruch 1, **dadurch gekennzeichnet, daß** die Vorsprünge (12) sich radial erstrecken und einen trapezförmigen Querschnitt aufweisen.

4. Kolben nach einem der Ansprüche 1 bis 3, **dadurch gekennzeichnet, daß** die axiale Erstreckung (14) des Kolbenringes (10) so bemessen ist, daß das Volumen des Kolbenringes (10), das durch die Vorsprünge (12) verdrängt wird, kleiner ist als das nicht vom Kolbenring (10) ausgefüllte Volumen der Nut (6) zwischen den Vorsprüngen (12).

## Claims

1. Piston (1) having a piston ring (10) for a hydraulic or pneumatic unit, in particular for a vibration damper, wherein the piston (1) which is provided with a damping device is disposed on a piston rod, divides a cylinder (9) into two working chambers and consists of at least two parts (2, 3) which lie against each other on a bearing surface (4) which extends transversely with respect to the axis of symmetry (5), and wherein the piston ring (10) which consists preferably of synthetic material comprises an axial extension (14) which is a multiple of the ring wall thickness (15) and lies in an outwardly circumferential groove (6) which extends preferably over both parts (2, 3), **characterised in that** the lateral surfaces (11) of the groove (6) are formed with projections (12) extending towards the groove (6) and the spacing (13) between the projections (12) of the respective lateral surfaces (11) is smaller than the axial extension (14) of the piston ring (10) prior to assembly.

2. Piston as claimed in claim 1, **characterised in that** the projections (12) extend radially and are wedge-shaped.

3. Piston as claimed in claim 1, **characterised in that** the projections (12) extend radially and comprise a trapezoidal cross-section.

4. Piston as claimed in any one of claims 1 to 3, **characterised in that** the axial extension (14) of the piston ring (10) is dimensioned in such a manner that the volume of the piston ring (10) which is displaced by the projections (12) is smaller than the volume of the groove (6), which is not filled by the piston ring (10), between the projections (12).

## Revendications

1. Piston (1) présentant un segment de piston (10) pour un ensemble hydraulique ou pneumatique, en particulier un amortisseur de vibrations, dans lequel le piston (1), doté d'un dispositif d'amortissement, est disposé sur une tige de piston, partage un cylindre (9) en deux chambres de travail et est constitué d'au moins deux parties (2, 3) contiguës à une surface d'appui (4) qui s'étend transversalement par rapport à l'axe de symétrie (5), et dans lequel le segment de piston (10), réalisé de préférence en matière synthétique, présente une étendue axiale (14) qui correspond à un multiple de l'épaisseur (15) de la paroi du segment, et est logé dans une rainure périphérique (6) extérieure qui s'étend de préférence sur les deux parties (2, 3), **caractérisé en ce que** les flancs de la rainure (6) sont configurés avec des saillies (12) qui s'étendent en direction de la rainure (6), et la distance (13) entre les saillies (12) des flancs (11) respectifs est plus petite que l'étendue axiale (14) du segment de piston (10) avant le montage.

2. Piston selon la revendication 1, **caractérisé en ce que** les saillies (12) s'étendent radialement et sont configurées en biseau.

3. Piston selon la revendication 1, **caractérisé en ce que** les saillies (12) s'étendent radialement et présentent une section transversale de forme trapézoïdale.

4. Piston selon l'une des revendications 1 à 3, **caractérisé en ce que** l'étendue axiale (14) du segment de piston (10) est dimensionné de telle sorte que le volume du segment de piston (10) qui est délimité par les saillies (12) est plus petit que le volume de la rainure (6) non rempli par le segment de piston (10) entre les saillies (12).
